(19) Europäisches Patentamt
European Patent Office
Office européen des brevets

(11) Veröffentlichungsnummer: **0 176 742**
**B1**

(12) **EUROPÄISCHE PATENTSCHRIFT**

(45) Veröffentlichungstag der Patentschrift: **26.10.88**

(51) Int. Cl.[4]: **C 09 B 56/04,** C 09 B 35/52, C 09 B 35/64, D 06 P 1/39

(21) Anmeldenummer: **85110546.0**

(22) Anmeldetag: **22.08.85**

(54) **Polyazofarbstoffe.**

(30) Priorität: **04.09.84 DE 3432413**

(43) Veröffentlichungstag der Anmeldung: **09.04.86 Patentblatt 86/15**

(45) Bekanntmachung des Hinweises auf die Patenterteilung: **26.10.88 Patentblatt 88/43**

(84) Benannte Vertragsstaaten: **CH DE FR GB IT LI**

(56) Entgegenhaltungen:
**GB - A - 785 084**
**US - A - 2 139 472**

**CHEMICAL ABSTRACTS, Band 89, 1978, Seite 84, Zusammenfassung Nr. 26019a, Columbus, Ohio, US; & PL-A-93 050 (OSRODEK BADAWCZO-ROZWOJOWY PRZEMYSLU BARWNIKOW "ORGANIKA") 30-11-1977**

(73) Patentinhaber: **BAYER AG, Konzernverwaltung RP Patentabteilung, D-5090 Leverkusen 1 Bayerwerk (DE)**

(72) Erfinder: **Mennicke, Winfried, Dr., Steglitzer Strasse 8, D-5090 Leverkusen (DE)**

**EP 0 176 742 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung sind die Polyazofarbstoffe der Formel

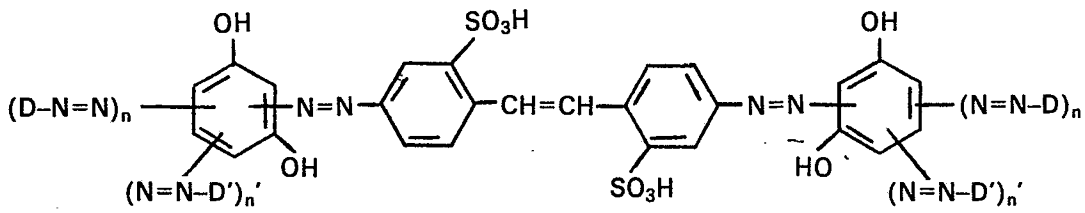

(I)

worin

D Rest einer Diazokomponente der Diphenylaminreihe,

D' D oder Rest einer Diazokomponente der Benzol- oder Naphthalinreihe,

n 0,8–1,2 und

n' 0–1, 2, wobei 0,8 ⩽ +n' ⩽ 2, bedeuten.

Die Reste D, D' können weitere übliche Substituenten tragen, beispielsweise $SO_3H$, COOH, $NO_2$, Halogen, wie Cl oder Br, OH, Alkyl, Alkoxy, Sulfamoyl, Carbamoyl oder Acetamino.

Bevorzugte Alkyl- oder Alkoxygruppen sind solche mit 1–4 C-Atomen, die gegebenenfalls weiter substituiert sein können, beispielsweise durch CN, Cl, OH, $C_1$–$C_4$-Alkoxy, Phenyl. Besonders bevorzugt sind Methyl oder Methoxy.

Die Sulfamoyl- und Carbamoylgruppen können mono- oder disubstituiert sein, beispielsweise durch gegebenenfalls substituiertes $C_1$–$C_4$-Alkyl oder durch Aryl, wobei letztzeres ein insbesondere gegebenenfalls substituiertes Phenyl sein kann mit Substituenten wie Halogen, insbesondere Cl und Br, $NO_2$, $C_1$–$C_4$-Alkyl, $C_1$–$C_4$-Alkoxy.

Bevorzugte Acylaminogruppen sind $C_1$–$C_4$-Alkylcarbonylamino, $C_1$–$C_4$-Alkoxycarbonylamino, $C_1$–$C_4$-Alkylsulfonylamino.

Von den Diazokomponenten $H_2N$–D sind solche der Formel II und von den Diazokomponenten $H_2N$–D' solche der Formel II, III, IV und V bevorzugt.

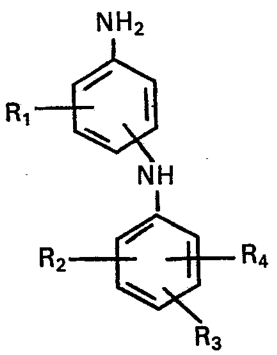

II

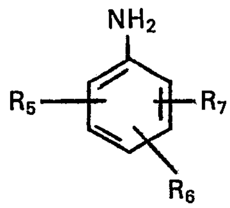

III

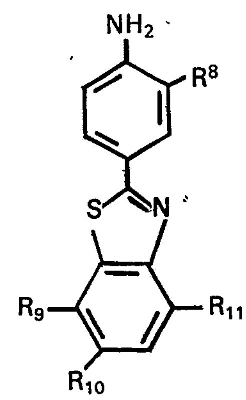

IV

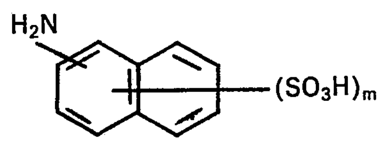

V

worin

$R_1, R_2, R_3, R_4$ = H, Cl, $NO_2$, $CH_3$, $OCH_3$, $SO_3H$, Sulfamoyl oder COOH,

$R_5, R_6, R_7$ = H, Cl, Br, $NO_2$, OH, $CH_3$, $OCH_3$, $SO_3H$, Sulfamoyl, COOH oder Carbamoyl,

$R_8$ = H, $CH_3$ oder $SO_3H$,

$R_9$ = H oder $SO_3H$,

$R_{10}, R_{11}$ = H oder $CH_3$ und

m = 0, 1, 2 oder 3 bedeuten.

Bevorzugte Farbstoffe sind solche der Formel

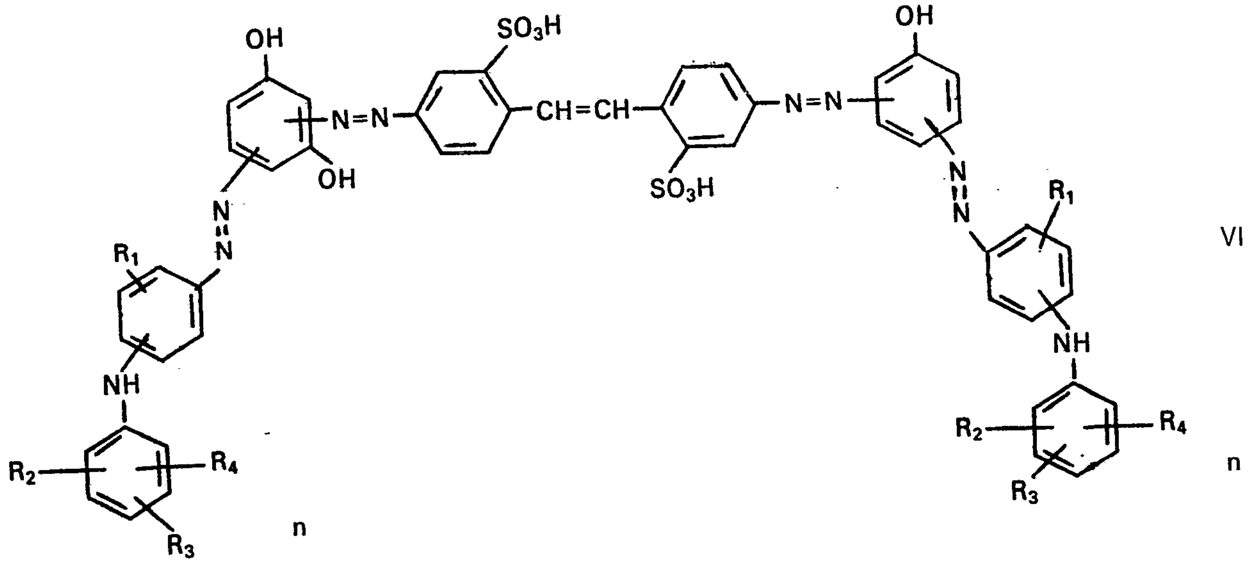

VI

worin

$R_1$, $R_2$, $R_3$, $R_4$ und n die obengenannte Bedeutung zukommt.

Die erfindungsgemässen Farbstoffe der Formel I bzw. VI können nach an sich bekannten Methoden hergestellt werden, indem 1 Mol Resorcin in beliebiger Reihenfolge mit 0,4–0,6 Mol diazotierter Flavonsäure, n Mol diazotiertem Amin $H_2N–D$ und n' Mol diazotiertem Amin $H_2N–D'$ angekuppelt wird. Die Umsetzung mit n' Mol diazotiertem Amin $H_2N–D'$ erfolgt vorzugsweise in der letzten Stufe. Die Kupplungsreaktion läuft bevorzugt im wässrigem Medium im pH-Bereich von 2–10 in Gegenwart von Säureacceptoren ab, beispielsweise in Gegenwart von Carbonaten, Hydrogencarbonaten, Oxiden und Hydroxiden von Alkali- und Erdalkalimetallen, wie $Li_2CO_3$, $Na_2CO_3$, $K_2CO_3$, $LiHCO_3$, $NaHCO_3$, $KHCO_3$, LiOH, NaOH, KOH, MgO oder CaO, oder von alkalisch wirkenden Salzen von Alkalimetallen, wie Natrium- oder Kaliumacetat, oder von Ammoniak oder Alkylaminen.

Die dabei gebildeten Polyazofarbstoffe fallen je nach eingesetztem Säureacceptor als Alkalisalze, wie Lithium-, Natrium-, Kaliumsalze, oder als Ammoniumsalze an. Sie können durch Aussalzen mit Alkalisalzen, Ansäuern, Eindampfen oder Zerstäubungstrocknung isoliert und mit den üblichen Hilfs- und Stellmitteln zu wasserlöslichen Präparaten verarbeitet werden.

Die erfindungsgemässen Farbstoffpräparate eignen sich zum Färben und Bedrucken von mit anionischen Farbstoffen anfärbbaren Materialien, wie hydroxylgruppen- und stickstoffhaltigen Fasermaterialien, vor allem zum Färben von Baumwolle, Seide, Leder, Polyamiden und Polyurethanen. Die bevorzugte Verwendung liegt im Färben von Leder und Pelzen, wobei neben Chromleder auch Veloursleder von Ziege, Rind und Schwein und mit verschiedenartigen Substanzen nachgegerbte Leder in Frage kommen.

Die erfindungsgemässen Farbstoffe eignen sich besonders zum Färben aus schwach saurem oder schwach alkalischem Bad und liefern ergiebige überwiegend braune Färbungen mit ausgezeichneten Echtheiten.

Die angegebenen Formeln sind die der freien Säure. Im allgemeinen setzt man die Salze insbesondere die Alkalisalze, wie Lithium-, Natrium- oder Kaliumsalze, oder die Ammoniumsalze ein.

In der PL-A-93 050 sind Polyazostilbenfarbstoffe beschrieben, die erhalten werden durch Kuppeln von tetrazotierter 4,4'-Diamino-2,2'-stilbendisulfonsäure auf einen Azofarbstoff, wobei als Azofarbstoff auch solche in Frage kommen, die unter Verwendung von Resorcin als Kupplungskomponente synthetisiert werden. Derartige Farbstoffe färben pflanzliches Fasermaterial und Leder in braunen Tönen.

Beispiel 1

18, 5 g 4,4'-Diaminostilben-2,2'-disulfonsäure werden in 100 ml Wasser durch Zufügen von etwa 10 ml 10 n Natronlauge bei pH 10 gelöst. Die Lösung wird mit 23 ml einer 4,35 n Natriumnitritlösung versetzt und auf ein Gemisch von 100 g Eis, 50 ml Wasser und 30 ml 10 n Salzsäure ausgetragen. Dabei bildet sich die Suspension desTetrazoniumsalzes, welche noch eine halbe Stunde weiter gerührt wird. Gegebenenfalls nach vorhandene salpetrige Säure wird mit Amidosulfonsäure zerstört.

Die Suspension wird erst mit 11 g Resorcin und dann im Verlauf von 30 Minuten mit ca. 35 ml einer 0,38 n Sodalösung versetzt, bis ein pH von 3,0 erreicht ist. Die Kupplung ist kurz danach beendet.

30,9 g 4-Nitro-4'-aminodiphenylamin-2-sulfonsäure werden in 400 ml Wasser und etwa 11 ml 10 n Natronlauge bei pH 10,5 gelöst und nach Zusatz von 23 ml einer 4,35 n Natriumnitritlösung auf ein Gemisch von 200 g Eis, 100 ml Wasser und 30 ml 10 n Salzsäure gegeben. Das dabei gefällte Diazoniumsalz wird noch 45 Minuten lang gerührt. Danach wird durch Zugabe von

Amidosulfonsäure überschüssige salpetrige Säure entfernt.

Die Suspension der diazotierten 4-Nitro-4'-aminodiphenylamin-2-sulfonsäure wird mit dem bei der ersten Kupplung entstandenen Farbstoff vereinigt. Beim Zutropfen von ca. 25 ml 10 n Natronlauge im Verlauf von 20 Minuten stellt sich ein pH von 10,0 ein. Nach 2 Std. Rühren bei pH 10 ist die Umsetzung zum Polyazofarbstoff der Formel

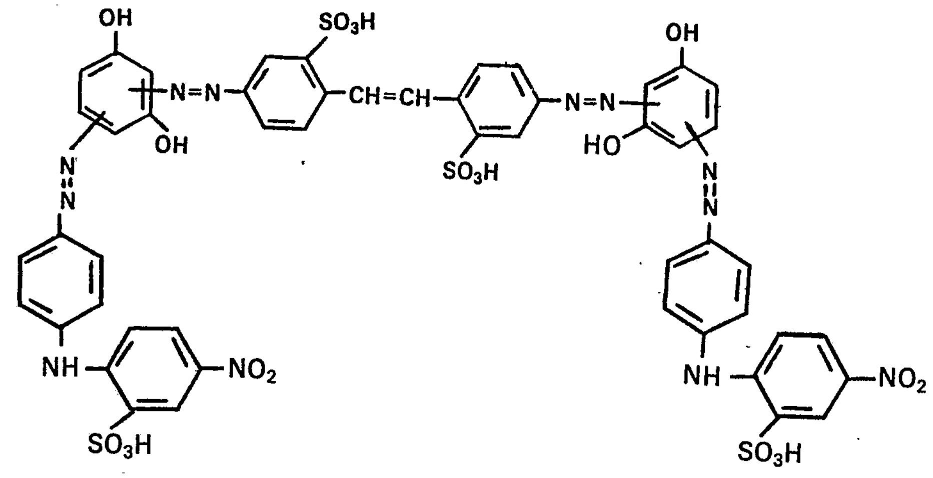

beendet. Das Produkt stellt nach Aussalzen mit 20% Natriumchlorid, Absaugen und Trocknen ein braunes Pulver dar, welches Baumwolle, Wolle und Leder in tiefen rotstichig braunen Tönen mit guten Echtheiten färbt.

Beispiel 2

18,5 g 4,4'-Diaminostilben-2,2'-disulfonsäure werden nach den Angaben des vorangehenden Beispiels tetrazotiert und auf 11 g Resorcin gekuppelt. Das Reaktionsprodukt wird dann mit der Diazoverbindung aus 50 g 4-Nitro-4'-aminodiphenylamin-2-sulfonsäure angekuppelt. Der erhaltene Polyazofarbstoff der Formel

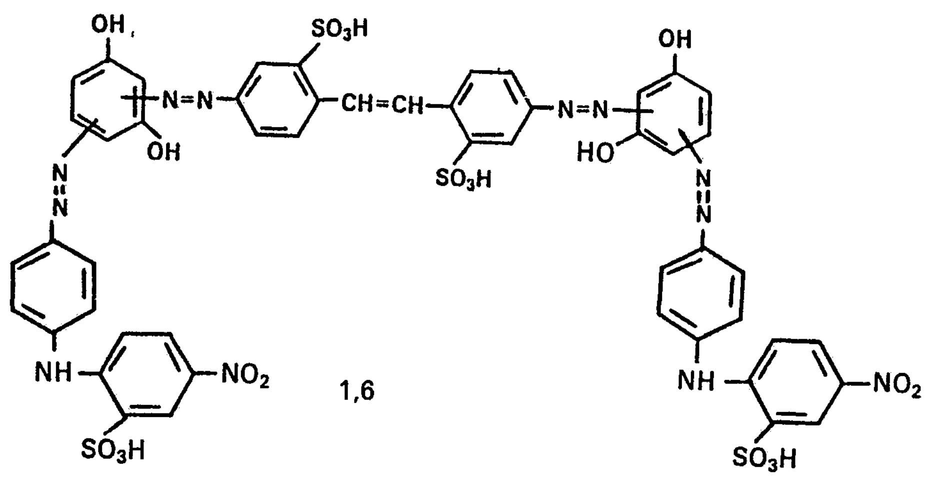

1,6 1,6

liefert auf Leder bordostichige tiefbraune Färbungen mit guten Gebrauchsechtheiten.

Beispiel 3

Der aus 18,5 g 4,4'-Diaminostilben-2,2'-disulfonsäure, 11 g Resorcin und 30,9 g 4-Nitro-4'-aminodiphenylamin-2-sulfonsäure unter den Bedingungen des Beispiels 1 gewonnene Farbstoff wird mit der auf übliche Weise hergestellten Diazoverbindung aus 13,8 g p-Nitroanilin angekuppelt. Der entstandene Polyazofarbstoff der Formel

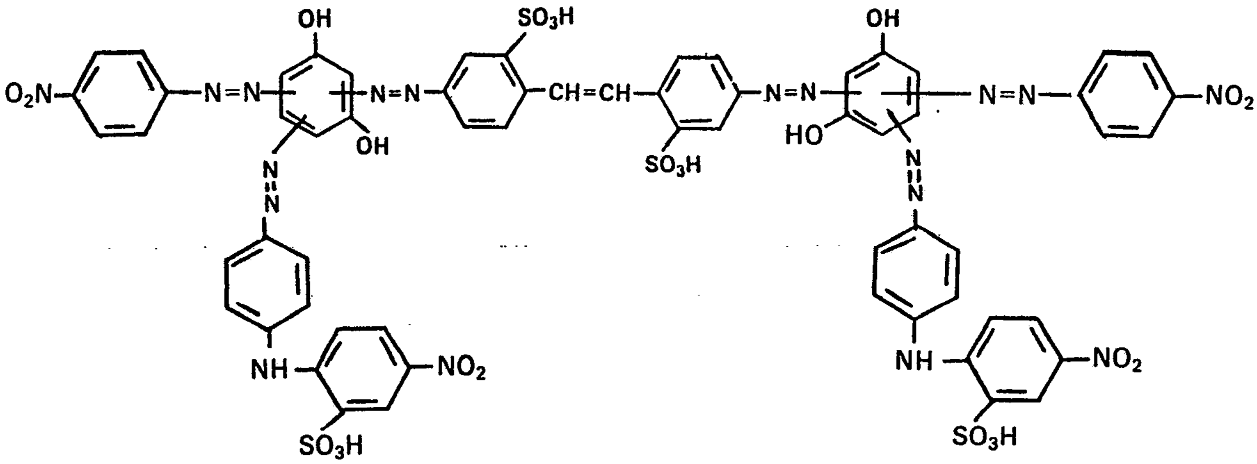

stellt in getrocknetem Zustand ein wasserlösliches, schwarzbraunes Pulver dar, mit dem man auf Leder dunkelbraune Färbungen erzielt.

In der folgenden Tabelle sind weitere Kombinationen von Aminen $H_2N$–D und $H_2N$–D' und die Farbtöne auf Leder der daraus abgeleiteten Farbstoffe aufgelistet. Zur Herstellung dieser Farbstoffe wird stets nach Beispiel 1 0,5 Mol tetrazotierte 4,4'-Diaminostilben-2,2'-disulfonsäure auf ein Mol Resorcin gekuppelt. Es folgt dann die Umsetzung mit einem Mol des in Spalte 1 stehenden diazotierten Amins $H_2N$–D und anschliessend gegebenenfalls mit n Mol des in Spalte 2 stehenden diazotierten Amins $H_2N$–D'.

Tabelle

| $H_2N$–D | n. ($H_2N$–D') | Färbung auf Leder |
|---|---|---|
| 4-Nitro-4'-aminodiphenylamin-2-sulfonsäure | 0,5. (4-Nitroanilin-2-sulfonsäure) | Dunkelbraun |
| 4-Aminodiphenylamin-2-sulfonsäure | – | rotstichig Braun |
| do. | 0,8. (4-Aminodiphenylamin-2-sulfonsäure) | bordostichig Braun |
| do. | 1. (4-Nitroanilin) | Dunkelbraun |
| do. | 0,8. (2-(4-Aminophenyl)-6-methylbenzothiazol-7-sulfonsäure | Dunkelbraun |
| 4'-Amino-2-nitrodiphenylamin-4-sulfonsäure | – | Rotstichig Braun |
| 4-Amino-4'-chlordiphenylamin-2-sulfonsäure | – | rotstichig Braun |
| do. | 0,5. (1-Naphthylamin-6-sulfonsäure) | Dunkelbraun |
| 4-Amino-4'-methoxydiphenylamin-2-sulfonsäure | – | rotstichig Braun |
| 4'-Amino-2-nitrodiphenylamin-4-sulfonamid | – | rotstichig Braun |
| do. | 1. (4-Nitroanilin-2-sulfonsäure) | Dunkelbraun |
| do. | 0,6. (4'-Amino-2-nitrodiphenylamin-4-sulfonamid) | bordostichig Braun |
| 4'-Amino-3'-methyl-4-nitrodiphenylamin-2-sulfonsäure | – | rotstichig Braun |
| 3'-Amino-4'-methyl-2-nitro-diphenylamin-4-sulfonsäure | – | rotstichig Braun |
| 3'-Amino-4-nitrodiphenylamin-2-sulfonsäure | – | rotstichig Braun |
| 4'-Amino-2,6-dinitrodiphenylamin-4-sulfonsäure | – | rotstichig Braun |
| 4-Aminodiphenylamin-2-sulfonsäure | 0,8. (1-Naphthylamin-4-sulfonsäure) | Dunkelbraun |
| do. | 0,8. (4-Nitro-2-aminophenol) | dunkles, rotstichiges Braun |
| do. | 0,6 (2-Methoxy-4-nitroanilin) | rotstichiges Braun |
| do. | 0,8 (2-Chlor-4-nitroanilin) | Dunkelbraun |
| do. | 0,8 (2-Naphthylamin-6-sulfonsäure) | Dunkelbraun |

## Patentansprüche

1. Polyazofarbstoffe der Formel

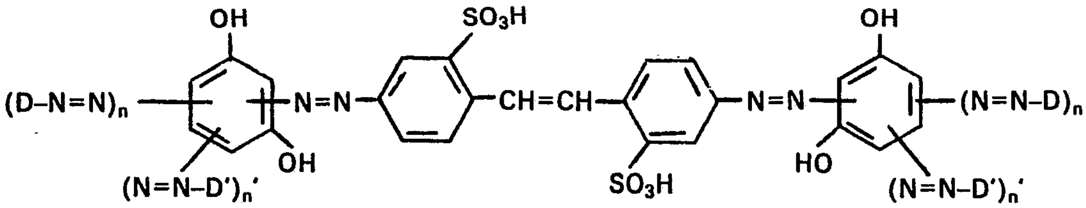

worin

D Rest einer Diazokomponente der Diphenylaminreihe,

D' D oder Rest einer Diazokomponente der Benzol- oder Naphthalinreihe,

n 0,8–1,2 und

n' 0–1,2, wobei $0{,}8 \leqslant n+n' \leqslant 2$ bedeuten.

2. Farbstoffe des Anspruchs 1, worin

D Rest der Formel

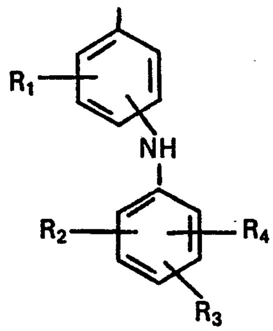

worin

$R_1, R_2, R_3, R_4 =$ H, Cl, $NO_2$, $CH_3$, $OCH_3$, $SO_3H$, Sulfamoyl oder COOH,

D' Rest der Formeln

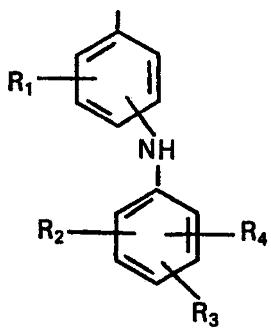

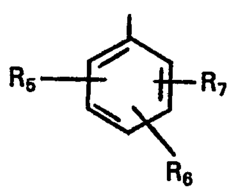

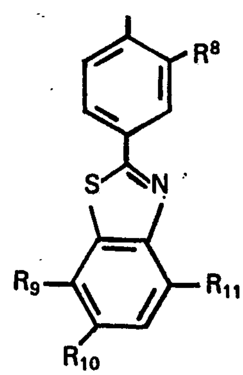

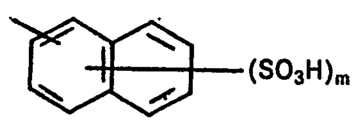

worin

$R_1, R_2, R_3, R_4 =$ H, Cl, $NO_2$, $CH_3$, $OCH_3$, $SO_3H$, Sulfamoyl oder COOH,

$R_5, R_6, R_7 =$ H, Cl, Br, $NO_2$, OH, $CH_3$, $OCH_3$, $SO_3H$, Sulfamoyl, COOH oder Carbamoyl,

$R_8 =$ H, $CH_3$ oder $SO_3H$,

$R_9 =$ H oder $SO_3H$,

$R_{10}, R_{11} =$ H oder $CH_3$ und

$m =$ 0, 1, 2 oder 3

bedeuten.

3. Farbstoffe der Ansprüche 1 und 2 der Formel

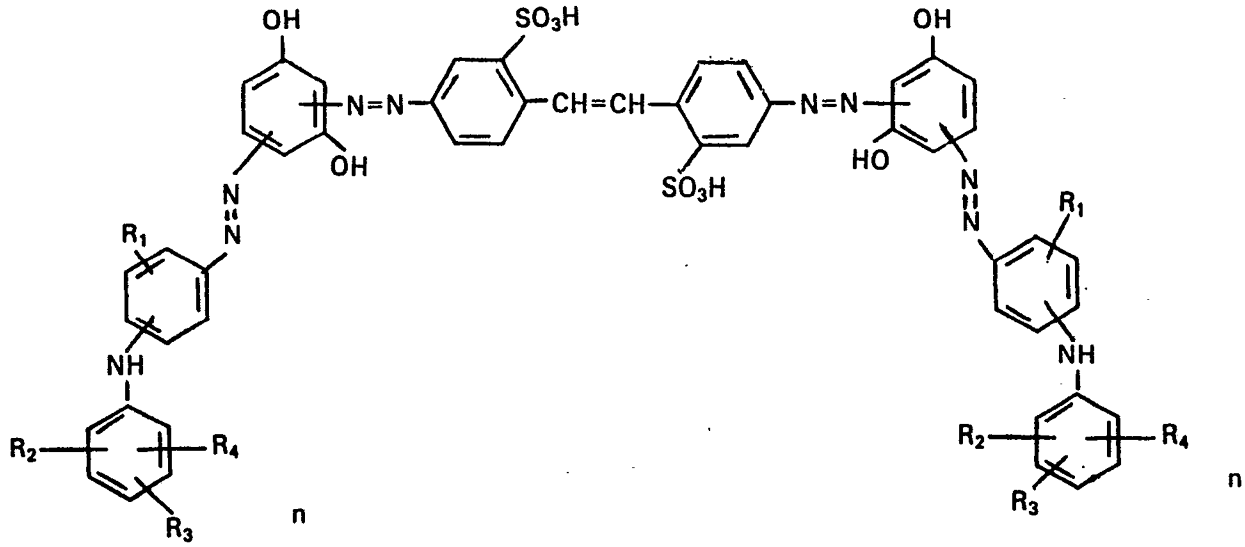

worin

$R_1$, $R_2$, $R_3$, $R_4$ und n die in den Ansprüchen 1 und 2 angegebene Bedeutung zukommt.

4. Verwendung der Farbstoffe der Ansprüche 1–3 zum Färben und Bedrucken von hydroxylgruppenhaltigen oder stickstoffhaltigen Fasermaterialien.

5. Mit den Farbstoffen der Ansprüche 1–3 gefärbte oder bedruckte hydroxylgruppenhaltige oder stickstoffhaltige Fasermaterialien.

**Revendications**

1. Colorants polyazoïques de formule

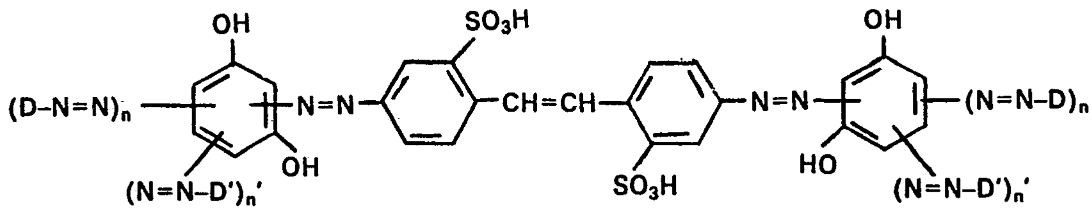

dans laquelle

D représente le reste d'un composant de diazotation de la série de la diphénylamine,

D' représente D ou le reste d'un composant de diazotation de la série du benzène ou du naphthalène,

n est un nombre de 0,8 à 1, 2 et

n' est un nombre de 0 à 1,2, avec $0{,}8 \leqslant n+n' \leqslant 2$.

2. Colorants selon la revendication 1, dans lesquels D représente le reste de formule

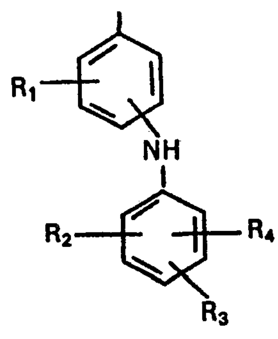

dans laquelle

$R_1$, $R_2$, $R_3$, $R_4$ = H, Cl, $NO_2$, $CH_3$, $OCH_3$, $SO_3H$, sulfamoyle ou COOH,

D' représente l'un des restes de formules

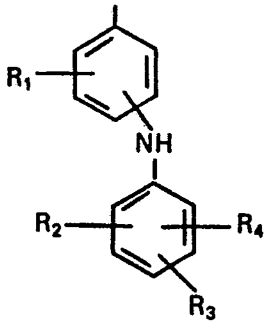

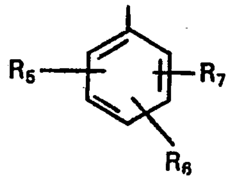

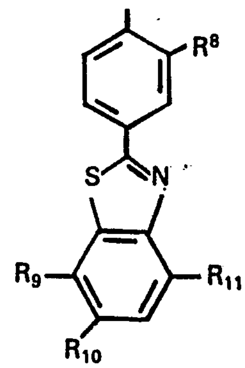

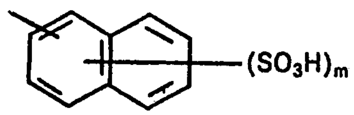

dans lesquelles

$R_1$, $R_2$, $R_3$, $R_4$ = H, Cl, $NO_2$, $CH_3$, $OCH_3$, $SO_3H$, sulfamoyle ou COOH,

$R_5$, $R_6$, $R_7$ = H, Cl, Br, $NO_2$, OH, $CH_3$, $OCH_3$, $SO_3H$, sulfamoyle, COOH ou carbamoyle,

$R_8$ = H, $CH_3$ ou $SO_3H$,

$R_9$ = H ou $SO_3H$,

$R_{10}$, $R_{11}$ = H ou $CH_3$ et

m = 0, 1, 2 ou 3.

3. Colorants selon les revendications 1 et 2 de formule

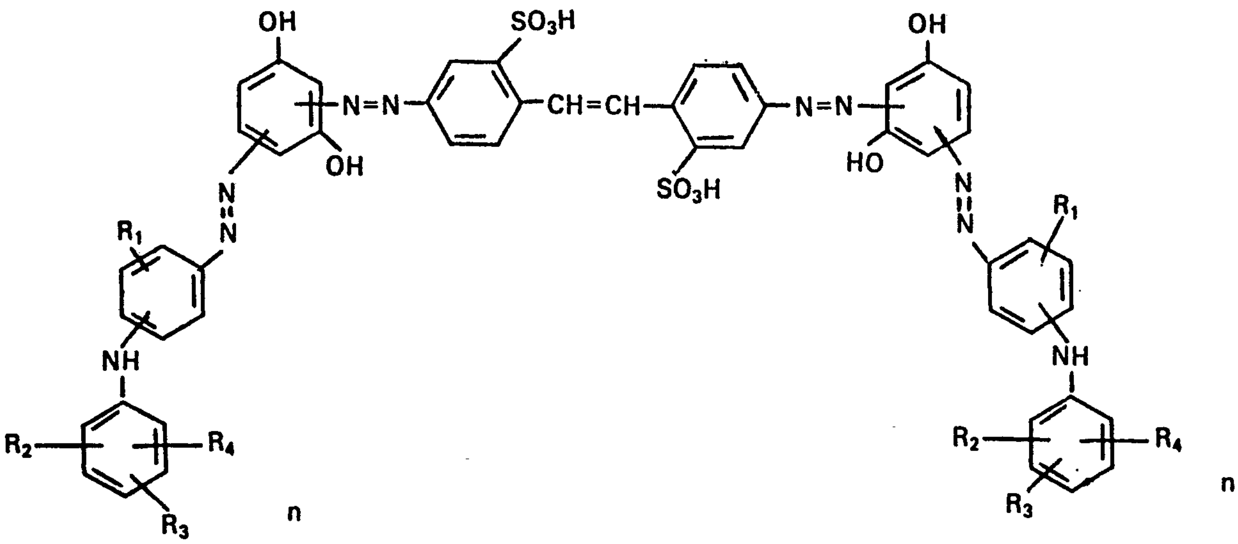

dans laquelle

$R_1$, $R_2$, $R_3$, $R_4$ et n ont la signification indiquée dans les revendications 1 et 2.

4. Utilisation des colorants selon les revendications 1–3 pour la teinture et l'impression de matières fibreuses contenant des groupes hydroxyles ou de l'azote.

5. Matières fibreuses contenant des groupes hydroxyles ou de l'azote teintes ou imprimées avec les colorants selon les revendications 1–3.

**Claims**

1. Polyazo dyes of the formula

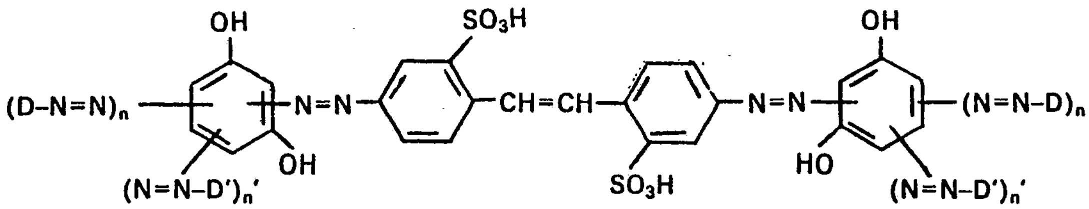

wherein

D denotes the radical of a diazo component of the diphenylamine series,

D′ denotes D or the radical of a diazo component of the benzene or naphthalene series,

n denotes 0.8–1.2 and

n′ denotes 0–1.2, with $0.8 \leqslant n+n' \leqslant 2$.

2. Dyestuffs of Claim 1,

wherein

D denotes the radical of the formula

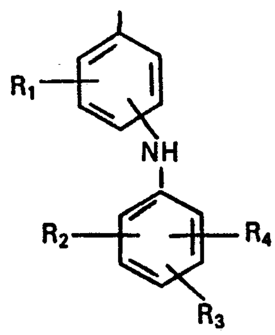

wherein

$R_1$, $R_2$, $R_3$ and $R_4$ = H, Cl, $NO_2$, $CH_3$, $OCH_3$, $SO_3H$, sulphamoyl or COOH

and D′ denotes the radical of the formulae

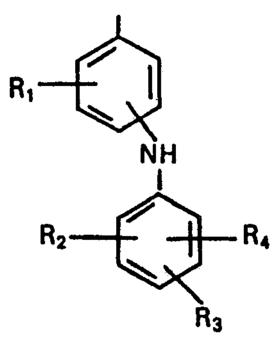

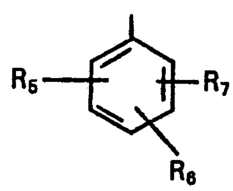

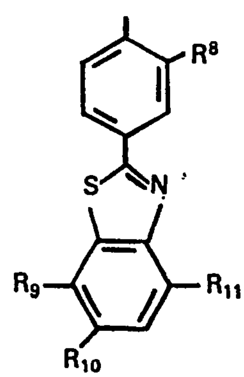

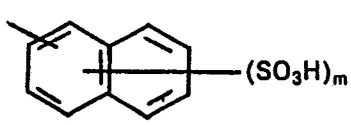

wherein

$R_1$, $R_2$, $R_3$ and $R_4$ = H, Cl, $NO_2$, $CH_3$, $OCH_3$, $SO_3H$, sulphamoyl or COOH,

$R_5$, $R_6$ and $R_7$ = H, Cl, Br, $NO_2$, OH, $CH_3$, $OCH_3$, $SO_3H$, sulphamoyl, COOH or carbamoyl,

$R_8$ = H, $CH_3$ or $SO_3H$,

$R_9$ = H or $SO_3H$,

$R_{10}$ and $R_{11}$ = H or $CH_3$ and

m = 0, 1, 2 or 3.

3. Dyestuffs of Claims 1 and 2, of the formula

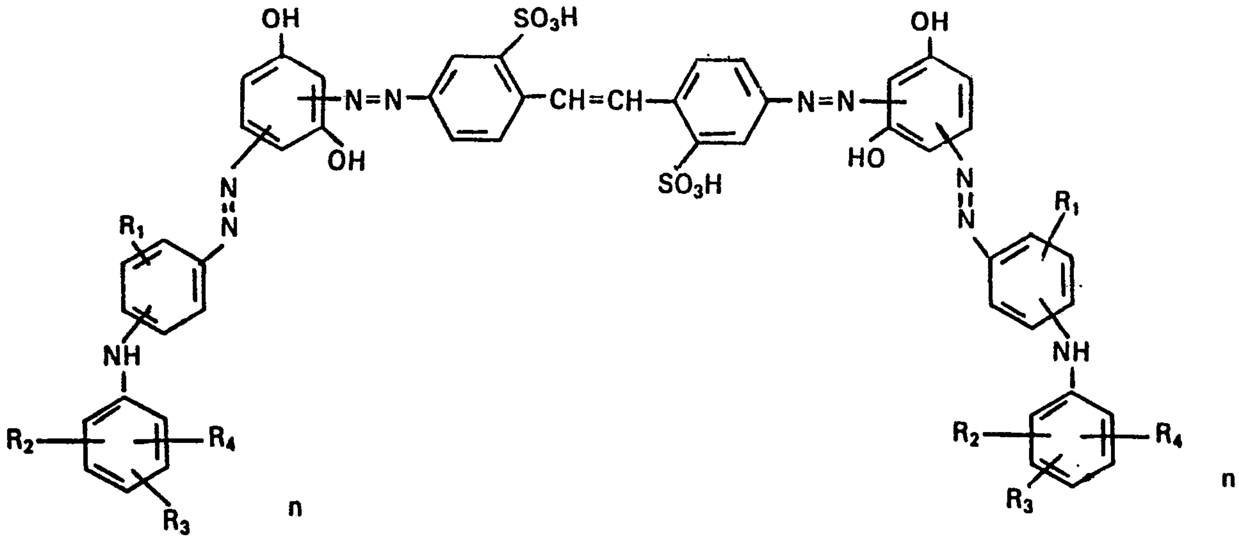

wherein

$R_1$, $R_2$, $R_3$, $R_4$ and n have the meaning given in Claims 1 and 2.

4. Use of the dyestuffs of Claims 1–3 for dyeing and printing fibre materials containing hydroxyl groups or containing nitrogen.

5. Fibre materials, containing hydroxyl groups or containing nitrogen, dyed or printed with the dyestuffs of Claims 1–3.